# EUROPÄISCHE PATENTSCHRIFT

(11) **EP 3 450 257 B1**
(45) Veröffentlichungstag und Bekanntmachung des Hinweises auf die Patenterteilung: **13.05.2020**
(21) Anmeldenummer: 18202895.1
(22) Anmeldetag: 30.09.2016
(51) Int. Cl.: B60R 5/04

(54) **ABTRENNVORRICHTUNG FÜR EINEN LADERAUM EINES KRAFTFAHRZEUGS, KANALBAUTEIL EINER ANTRIEBSVORRICHTUNG IN EINEM KRAFTFAHRZEUG SOWIE KRAFTFAHRZEUG**
SEPARATING DEVICE FOR A CARGO AREA OF A MOTOR VEHICLE, CHANNEL COMPONENT OF A DRIVE DEVICE IN A MOTOR VEHICLE AND MOTOR VEHICLE
DISPOSITIF DE SÉPARATION DE COFFRE DE VÉHICULE AUTOMOBILE, CONDUIT D'UN DISPOSITIF D'ENTRAÎNEMENT DANS UN VÉHICULE AUTOMOBILE AINSI QUE VÉHICULE AUTOMOBILE

(30) Priorität: 01.10.2015 DE 102015116726; 27.10.2015 DE 102015118305
(43) Veröffentlichungstag der Anmeldung: 06.03.2019
(62) Teilanmeldung aus: 16191858.6
(73) Patentinhaber: FKT GmbH, 85104 Pförring (DE)
(72) Erfinder: Huber, Klaus, 85290 Geisenfeld (DE); Müller, Stefan, 85088 Vohburg (DE)
(74) Vertreter: Schlief, Thomas P.

(56) Entgegenhaltungen:
- DE-A1-102006 015 546
- DE-U1-202008 017 983

## Beschreibung

Die vorliegende Erfindung betrifft eine Abtrennvorrichtung zum Abtrennen eines Laderaums eines Kraftfahrzeugs mit wenigstens einer Rolloanordnung, welche eine Wickelwelle mit zwei seitlichen Enden, eine auf die Wickelwelle aufwickelbare bzw. von dieser abwickelbare Rollobahn, ein Zugelement, insbesondere einen Zugspriegel mit zwei Zugspriegelenden, sowie zwei Lagermittel, in welchen die Wickelwelle mit ihren seitlichen Enden drehbar gelagert ist, aufweist, mit einer Antriebsvorrichtung, welche wenigstens einen elektrischen Antrieb, zwei an ihrem einen Ende mit dem Antrieb und an ihrem anderen Ende mit der Rolloanordnung verbundene Übertragungsmittel zur Betätigung der Rollobahn sowie zwei Führungsrohre, in welchen die Übertragungsmittel verschieblich geführt sind, aufweist, sowie mit wenigstens zwei einander gegenüberliegenden Führungsschienen.

Abtrennvorrichtungen sind im Stand der Technik in verschiedenen Ausführungen, beispielsweise in Form von Laderaumabdeckungen, bekannt geworden. Üblicherweise beinhalten diese eine hinter den Rücksitzen angeordnete Rollokassette mit einer ausziehbaren Rollobahn. Die Rollokassetten können dabei fest oder entnehmbar in dem Fahrzeug angeordnet sein. Die Rollobahn ist in der Regel mittels eines Zugspriegels, der in im Fahrzeug verbauten Führungsschienen seitlich geführt ist, ausziehbar. Um den Bedienkomfort der Abtrennvorrichtungen zu erhöhen, sind häufig elektrische Antriebe vorgesehen. Die DE 103 57 153 A1 zeigt beispielsweise eine derartige Abtrennvorrichtung.

Aus der DE 20 2008 017 983 U1 ist ebenfalls eine solche Abtrennvorrichtung bekannt. Der elektrische Antrieb ist über einen Betätigungszug sowie einen Mitnehmer auf jeder Seite mit einer Zugstange zum Ausziehen der Rollobahn verbunden. Die Montage der Abdeckvorrichtung ist in dieser Schrift nicht beschrieben.

Aus der DE 10 2006 015 546 A1 ist eine andere Abtrennvorrichtung bekannt. Dabei sind in jeder der beiden D-Säulen des Fahrzeugs eine Führungsanordnung und ein Antrieb angeordnet. Die Führungsanordnung weist ein Mitnahmeelement zum Verbinden mit einem Laderaumabdeckelement auf sowie eine Laderaumabdeckelementaufnahme. Mittels dieser Anordnung kann beim Öffnen der Heckklappe das Auszugsteil der ausgezogenen Abtrennvorrichtung entlang der D-Säule verfahren werden, um die Beladeöffnung zu vergrößern.

Unabhängig von der Bauart der Laderaumabdeckung bzw. Abtrennvorrichtung gestaltet sich die Montage der Abtrennvorrichtung in das Fahrzeug jedoch oftmals als schwierig. So müssen beispielsweise die Führungsschienen einerseits fest an den Seitenverkleidungen des Fahrzeugs befestigt werden und andererseits lagerichtig in Bezug auf die Wickelwelle. Wesentlich für die Funktion der Abtrennvorrichtung ist auch die Führung der Übertragungsmittel, welche den Zugspriegel beidseits antreiben, sowie die Anbindung der Übertragungsmittel an den Antrieb und den Zugspriegel. Schließlich muss die Rolloanordnung in die im Fahrzeug montierten Führungsschienen eingebracht werden, wobei ein Toleranzausgleich in Fahrzeugquerrichtung ermöglicht werden muss. Die korrekte Einstellung der Abtrennvorrichtung sowie die Überprüfung der Funktionalität kann somit erst nach Montage in das Fahrzeug erfolgen. Auch ist der Aufbau der Abtrennvorrichtungen oft komplex und erfordert zahlreiche Montageschritte. Derartige Probleme treten auch bei anderen mittels eines Antriebs angetriebenen und mittels Übertragungsmitteln betätigten Vorrichtungen in Kraftfahrzeugen auf.

Aufgabe der vorliegenden Erfindung ist es, eine Abtrennvorrichtung vorzuschlagen, welche eine einfache Montage ermöglicht.

Die Aufgabe wird gelöst mit den Merkmalen des unabhängigen Anspruchs 1.

Bei einer Abtrennvorrichtung der eingangs genannten Art mit wenigstens einer Rolloanordnung, mit wenigstens zwei einander gegenüberliegenden Führungsschienen und mit einer Antriebsvorrichtung, welche wenigstens einen elektrischen Antrieb, zwei an ihrem einen Ende mit dem Antrieb und an ihrem anderen Ende mit der Rolloanordnung verbundene Übertragungsmittel zur Betätigung der Rollobahn sowie zwei Führungsrohre, in welchen die Übertragungsmittel verschieblich geführt sind, aufweist, ist vorzugsweise vorgesehen, dass die Antriebsvorrichtung ein Kanalbauteil mit zwei Führungskanälen zur Aufnahme von temporären Überlängen der Übertragungsmittel aufweist.

Ebenso ist bei einem Kanalbauteil einer Antriebsvorrichtung in einem Kraftfahrzeug, welche wenigstens einen elektrischen Antrieb sowie zwei an ihrem einen Ende mit dem Antrieb und an ihrem anderen Ende mit einem zu betätigenden Element, insbesondere einer Rolloanordnung, verbundene Übertragungsmittel sowie zwei Führungsrohre, in welchen die Übertragungsmittel verschieblich geführt sind, aufweist, vorzugsweise vorgesehen, dass das Kanalbauteil zwei Führungskanäle zur Aufnahme von temporären Überlängen der Übertragungsmittel aufweist.

Ein solches Kanalbauteil ermöglicht es, die bei einem nicht betätigten bzw. sich in Ruhestellung befindlichen, durch die Antriebsvorrichtung angetriebenen Element auftretenden Überlängen der Übertragungsmittel aufzunehmen und sicher zu führen. Bei einer Abtrennvorrichtung mit einer Rollobahn können die bei auf die Wickelwelle aufgewickelter bzw. sich in Ruhestellung befindlicher Rollobahn auftretenden Überlängen der Übertragungsmittel aufgenommen werden und geführt werden. Funktionsbeeinträchtigungen des angetriebenen Elements, insbesondere der Rollobahn der Abtrennvorrichtung, durch sich verhakende oder schlecht geführte Steigungskabel können dadurch vermieden werden. Zudem sind die Überlängen der Übertragungsmittel, beispielsweise Steigungskabel, vor Verschmutzung geschützt, was weiterhin zu einer langfristigen Funktionalität beiträgt. Auch das Handling der

Übertragungsmittel bei der Montage des angetriebenen Elements bzw. der der Abtrennvorrichtung in das Fahrzeug sowie die Einstellung der Übertragungsmittel in Bezug auf den Antrieb und das angetriebene Element, insbesondere die Rolloanordnung, wird durch das Kanalbauteil erleichtert.

Eine vorteilhafte Ausführung des Kanalbauteils und der Abtrennvorrichtung sieht vor, dass das Kanalbauteil einen zweischaligen Aufbau mit einer Oberschale und einer Unterschale aufweist. Die Führungskanäle sind dabei zwischen den beiden Schalen ausgebildet. Dies ermöglicht eine einfache Herstellung des Kanalbauteils.

Besonders vorteilhaft ist es auch, wenn das Kanalbauteil ein Spritzgussbauteil ist, da dieses hierdurch besonders kostengünstig hergestellt werden kann. Insbesondere bei einem zweischaligen Aufbau ist die Herstellung des Kanalbauteils weiter vereinfacht, da keine Kerne für die Kanäle in dem Spritzgussstück oder nachträgliche Bearbeitungen zur Herstellung der Führungskanäle benötigt werden.

Vorteilhaft ist es weiterhin, wenn das Kanalbauteil eine Aufnahmevorrichtung zur Aufnahme des elektrischen Antriebs aufweist. Dieser kann hierdurch bereits vor der Montage in das Fahrzeug mit dem Kanalbauteil und den Übertragungsmitteln verbunden werden und muss nicht mehr separat im Fahrzeug befestigt werden. Zugleich ermöglicht dies auch die Einstellung des Antriebs in Bezug auf die Übertragungsmittel bereits vor dem Einbau in das Fahrzeug. Besonders vorteilhaft ist es dabei, wenn die Aufnahmevorrichtung einteilig an das Kanalbauteil angeformt ist, da hierdurch ein weiterer Montageschritt entfällt und der Antrieb automatisch lagerichtig platziert wird.

Für eine Abtrennvorrichtung mit wenigstens einer Rolloanordnung, einer Antriebsvorrichtung sowie zwei Führungsschienen wie eingangs beschrieben wird gemäß der Erfindung vorgeschlagen, dass die Antriebsvorrichtung und die Rolloanordnung eine vormontierbare Baugruppe bilden. Hierdurch wird wiederum die Montage der Abtrennvorrichtung in das Fahrzeug erleichtert, da die vormontierte Baugruppe als Ganzes mit nur wenigen Befestigungspunkten im Fahrzeug befestigt werden muss. Zugleich sind die einzelnen Bauteile der Abtrennvorrichtung bereits lagerichtig zueinander vormontiert, so dass bei der Montage in das Fahrzeug lediglich noch die Führungsschienen in Bezug auf die Abtrennvorrichtung eingestellt werden müssen.

Nach einer vorteilhaften Weiterbildung der Abtrennvorrichtung ist die Rolloanordnung kassettenlos ausgeführt, d.h. die seitlichen Lagermittel der Wickelwelle werden nicht durch eine die Wickelwelle umgebende Kassette gebildet, sondern die Wickelwelle ist mit ihren seitlichen Enden direkt in einem anderen Bauteil der Abtrennvorrichtung, vorzugsweise den Führungsschienen, gelagert. Der Aufbau der Abtrennvorrichtung ist durch eine solche kassettenlose Rolloanordnung weiter vereinfacht. Zudem hat die Abtrennvorrichtung nur einen geringen Platzbedarf. Besonders vorteilhaft ist es dabei, wenn die Wickelwelle mit ihren seitlichen Enden verschiebbar in den Führungsschienen geführt ist. Die Wickelwelle kann hierdurch bei entsprechend geformten Führungsschienen zwischen zwei oder mehreren Positionen, beispielsweise einer Arbeitsposition und einer Verstauposition oder auch einer weiteren Arbeitsposition, hin und her verfahren werden. Zudem ist es auch möglich, die Wickelwelle, die verschiebbar in den Führungsschienen geführt ist, zugleich zum Ausziehen bzw. Aufwickeln der Rollobahn zu benutzen. In diesem Fall weist die Abtrennvorrichtung als Zugelement lediglich eine Halterung oder dgl. auf, welche das der Wickelwelle abgewandte Ende der Rollobahn fixiert. Beim Verschieben der Wickelwelle wird somit automatisch auch die Rollobahn unter Drehung der Wickelwelle abgewickelt bzw. auf diese aufgewickelt.

Insbesondere bei einer kassettenlosen Ausführung der Rolloanordnung ist es vorteilhaft, wenn die Lagermittel der Wickelwelle lösbare Endstücke für die Führungsschienen bilden. Die lösbaren Endstücke sind ebenfalls Bestandteil der vormontierbaren Baugruppe, so dass das Einfädeln des Zugspriegels und/oder der Wickelwelle in die Führungsschienen nach Montage der Führungsschienen entfällt.

Vorzugsweise sind bei der Abtrennvorrichtung der Zugspriegel mit seinen beiden Zugspriegelenden und die Wickelwelle mit ihren seitlichen Enden verschiebbar in den Führungsschienen geführt, da das Rollo hierdurch besonders komfortabel bedienbar ist und verschiedene Positionen der Wickelwelle wie oben beschrieben erlaubt. Denkbar ist es jedoch auch, lediglich den Zugspriegel verschiebbar in den Führungsschienen zu führen, um ein komfortables Ausziehen und Aufwickeln der Rollobahn zu ermöglichen. Die Endstücke beinhalten in diesem Fall einen separaten Lagerbereich, in welchem die seitlichen Enden der Wickelwelle drehbar, aber in Bezug auf die Längsrichtung der Führungsschienen ortsfest gelagert ist.

Die Montage der Abtrennvorrichtung in das Fahrzeug wird erleichtert, wenn die vormontierbare Baugruppe, insbesondere die Wickelwelle und/oder der Zugspriegel, eine Vorrichtung zum Toleranzausgleich in Fahrzeugquerrichtung beinhaltet. Ein Einlehren der Abtrennvorrichtung bzw. der vormontierbaren Baugruppe in das Fahrzeug ist hierdurch nicht erforderlich. Die seitlichen Enden der Wickelwelle und/oder die Zugspriegelenden können hierzu beispielsweise als separate Bauteile ausgeführt sein, die teleskopisch und federnd mit der Wickelwelle und/oder dem Zugspriegel verbunden sind. Ebenso wäre es jedoch auch möglich, die Vorrichtung zum Toleranzausgleich in Fahrzeugquerrichtung innerhalb der Endstücke vorzusehen.

Um nach der Montage der vormontierbaren Baugruppe die Montage der Führungsschienen zu erleichtern, ist es vorteilhaft, wenn die Endstücke ein Führungselement, insbesondere eine Schwalbenschwanzführung oder dgl., zur Positionierung und Befestigung der Führungsschienen beinhalten. Die Führungsschienen können hierdurch ohne weitere Einstellarbeiten mit der vormontierten Baugruppe verbunden werden, wobei die Führungsnuten der Führungsschienen automatisch korrekt in Bezug auf die Führungsnuten der Endstücke positioniert sind. Ist wie oben beschrieben eine Vorrichtung zum Toleranzausgleich innerhalb der vormontierbaren Baugruppe vorgesehen, so können die Führungsschienen nach ihrer Verbindung mit den Endstücken ohne weitere Einstellarbeiten im Fahrzeug befestigt werden, da eine Zentrierung der Abtrennvorrichtung selbsttätig erfolgt.

Vorteilhaft ist es weiterhin, wenn jedes der beiden Führungsrohre mit seinem einen Ende an einem der beiden Endstücke befestigt ist und mit seinem anderen Ende an dem Kanalbauteil befestigt ist. Bei dem Kanalbauteil ist es vorteilhaft, wenn die Führungsrohre mit jeweils einem ihrer Enden an dem Kanalbauteil befestigt sind. Eine derartige, vormontierbare Baugruppe weist hierdurch auch beim Transport und beim Handling während der Montage bereits eine hohe Stabilität auf.

Besonders vorteilhaft ist es aus diesem Grund auch, wenn jedes Führungsrohr einteilig mit dem ihm jeweils zugeordneten Endstück ausgeführt ist. Zudem kann hierdurch ein weiterer Montageschritt eingespart werden. Ein solches einteilig mit einem Endstück ausgeführtes Führungsrohr kann beispielsweise kostengünstig als Spritzgusssteil hergestellt werden.

Eine besonders vorteilhafte Weiterbildung der Abtrennvorrichtung sieht vor, dass die Führungsrohre zweiteilig aus zwei Halbschalen ausgebildet sind, wobei vorzugsweise die Halbschalen durch Clipverbindungen miteinander verbunden sind. Bei der Herstellung als Spritzgussstück können die Clipverbindungen in vorteilhafter Weise direkt an die Halbschalen angespritzt werden. Besonders vorteilhaft ist es dabei wiederum, wenn das Endstück einteilig mit einer der Halbschalen des ihm zugeordneten Führungsrohres ausgebildet ist.

Nach einer anderen vorteilhaften Weiterbildung der Erfindung sind die Führungsrohre schwenkbar an dem Kanalbauteil befestigt. Die Führungsrohre sind somit zwischen einer an das Kanalbauteil angeklappten Transportposition und einer vom Kanalbauteil abgeklappten Gebrauchsposition bewegbar. Dies ermöglicht trotz der Vormontage der Rolloanordnung mit der Antriebsvorrichtung einen platzsparenden Transport und eine platzsparende Lagerung.

Besonders vorteilhaft ist es weiterhin, wenn die Führungsrohre zumindest in der Gebrauchsposition verrastbar sind. Die schwenkbare Befestigung des Führungsrohres an dem Kanalbauteil beinhaltet hierzu eine Rastvorrichtung. Die Montage des Kanalbauteils mit den vormontierten Führungsrohren bzw. die Montage der vormontierbaren Baugruppe in das Fahrzeug wird hierdurch erleichtert.

Um die vormontierbare Baugruppe bei ihrer Montage in dem Kraftfahrzeug vorzupositionieren, weist die Abtrennvorrichtung wenigstens zwei, vorzugsweise wenigstens vier, Positionierhilfen, insbesondere Positionierpins auf. Die Positionierpins sind vorzugsweise derart ausgebildet, dass sie die vormontierbare Baugruppe zugleich bis zu ihrer endgültigen Befestigung in dem Fahrzeug fixieren.

Weiterhin ist es vorteilhaft, wenn die Abtrennvorrichtung eine Zentriervorrichtung zur Zentrierung des Antriebs in Bezug auf die Übertragungsmittel aufweist.

Vorzugsweise beinhaltet die vormontierbare Baugruppe eine Aufnahmevorrichtung zur Aufnahme des elektrischen Antriebs. Um innerhalb der Aufnahmevorrichtung eine Zentriervorrichtung auszubilden, ist dabei der elektrische Antrieb um eine Mittenlage beweglich, insbesondere um die Mittenlage verschiebbar oder drehbeweglich, an der Aufnahmevorrichtung befestigt. Somit kann der Antrieb, der stets im Eingriff mit den beiden Übertragungsmitteln steht, bei Erreichen der Endlage des ersten Übertragungsmittels sich aus der Mittenlage verdrehen oder verschieben, bis schließlich auch das zweite Übertragungsmittel seine Endlage erreicht. Es ist somit keine aufwendige Zentrierung und Fixierung des Antriebs in Bezug auf die Übertragungsmittel bei der Montage der Abtrennvorrichtung erforderlich.

Besonders vorteilhaft ist es dabei, wenn der elektrische Antrieb mittels wenigstens eines Federelements, vorzugsweise mittels zwei beidseits der Mittenlage angeordneter Federelemente, an der Aufnahmevorrichtung befestigt ist. Das oder die Federelemente halten den Antrieb während der Fahrbewegung der Rollobahn in der Mittenlage und vermeiden ein Verkanten des Zugspriegels. Erst bei Erreichen der Endlage des ersten Übertragungsmittels bzw. des ersten Zugspriegelendes wird die den Antrieb in der Mittenlage haltende Federkraft überschritten, so dass der Antrieb schließlich aus seiner Mittenlage verschoben bzw. verdreht wird. Die Zentrierung kann somit während des gesamten Betriebs selbsttätig erfolgen.

Vorteilhafterweise ist dabei wiederum die Aufnahmevorrichtung einteilig mit dem Kanalbauteil ausgebildet.

Weitere Vorteile der Erfindung werden anhand der nachfolgend dargestellten Ausführungsbeispiele beschrieben. Es zeigen:
- **Figur 1**: eine Abtrennvorrichtung in einer Übersichtsdarstellung,
- **Figur 2**: eine perspektivische Detaildarstellung eines Kanalbauteils der Abtrennvorrichtung,
- **Figur 3**: eine perspektivische Detaildarstellung eines Endstücks mit angeformtem Führungsrohr,
- **Figur 4**: eine perspektivische, abgebrochene Detaildarstellung einer Führungsschiene,
- **Figur 5**: eine Schnittdarstellung eines zweiteiligen Führungsrohres,
- **Figur 6**: eine vormontierbare Baugruppe einer Abtrennvorrichtung gemäß der Erfindung in einer Transportstellung,
- **Figur 7**: die vormontierbare Baugruppe der Figur 6 in einer Gebrauchsstellung,
- **Figur 8**: eine Zentriervorrichtung für den Antrieb in einer perspektivischen Draufsicht, sowie
- **Figur 9**: eine Untersicht der Zentriervorrichtung in einer perspektivischen Darstellung.

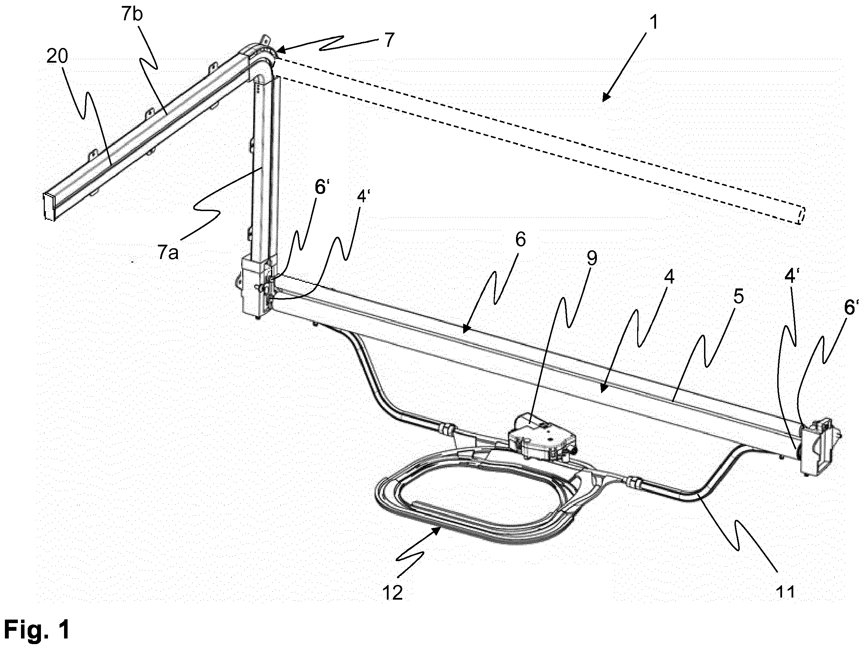

Figur 1 zeigt eine Abtrennvorrichtung 1 für einen Laderaum eines Kraftfahrzeugs in einer Übersichtsdarstellung. Die Abtrennvorrichtung 1 weist in üblicher Weise eine Rolloanordnung sowie eine Antriebsvorrrichtung auf. Die Rolloanordnung ist vorliegend kassettenlos ausgeführt und beinhaltet eine Wickelwelle 4 mit zwei seitlichen Enden 4', eine auf die Wickelwelle 4 aufwickelbare bzw. von dieser abwickelbare Rollobahn 5, die vorliegend in auf die Wickelwelle 4 aufgewickelter Position gezeigt ist, sowie nach vorliegender Darstellung einen Zugspriegel 6 zum Aufwickeln bzw. Abwickeln der Rollobahn 5. Die Wickelwelle 4 ist nach vorliegender Darstellung mit ihren beiden seitlichen Enden 4' in Endstücken 17, welche im Folgenden noch näher beschrieben werden, drehbar gelagert, so dass die Rollobahn 5 von der Wickelwelle 4 abwickelbar und auf diese aufwickelbar ist.

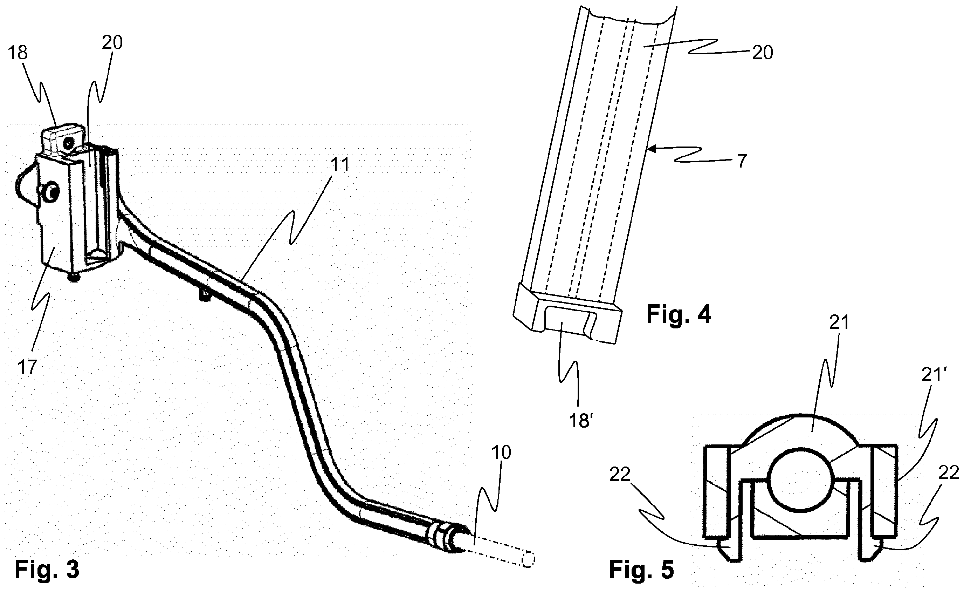

Zum Betätigen der Rolloanordnung weist die Antriebsvorrichtung einen elektrischen Antrieb 9, zwei an ihrem einen Ende mit dem Antrieb 9 und an ihrem anderen Ende mit dem Zugspriegel 6 verbundene Übertragungsmittel 10 (s. Fig. 3) auf. Die Übertragungsmittel 10 (hier nicht sichtbar), beispielsweise Steigungskabel, sonstige druckfeste Kabel oder Antriebswellen, sind zum Antreiben des Zugspriegels 6 verschieblich in Führungsrohren 11 geführt.

Weiterhin weist die Abtrennvorrichtung 1 wenigstens zwei einander gegenüberliegende Führungsschienen 7 auf, in welchen vorliegend der Zugspriegel 6 mit seinen beiden Zugspriegelenden 6' bei der Betätigung der Rollobahn 5 verschieblich geführt ist. Zusätzlich ist nach vorliegender Darstellung auch die Wickelwelle 4 mit ihren seitlichen Enden 4' verschieblich in den Führungsschienen 7 geführt. Die Wickelwelle 4 kann hierdurch mittels des Antriebs 9 beispielsweise aus einer hier dargestellten Verstauposition im Bereich des Fahrzeugbodens (nicht dargestellt) in eine Gebrauchsposition (gestrichelt dargestellt) überführt werden. Die Führungsschienen 7 weisen hierzu einen ersten Führungsschienenabschnitt 7a auf, der sich beispielsweise im Wesentlichen senkrecht hinter den Rücksitzen eines Kraftfahrzeugs erstrecken kann, um die Wickelwelle 4 zu verfahren, sowie einen zweiten Führungsschienenabschnitt 7b, der sich im Wesentlichen parallel zu einem Fahrzeugboden erstreckt, um die Rollobahn 5 auszuziehen. Die Abtrennvorrichtung 1 kann jedoch abweichend von der gezeigten Darstellung auch nur einen einzigen Führungsschienenabschnitt oder zwei in Längsrichtung hintereinander angeordnete Führungsschienenabschnitte 7a, 7b aufweisen.

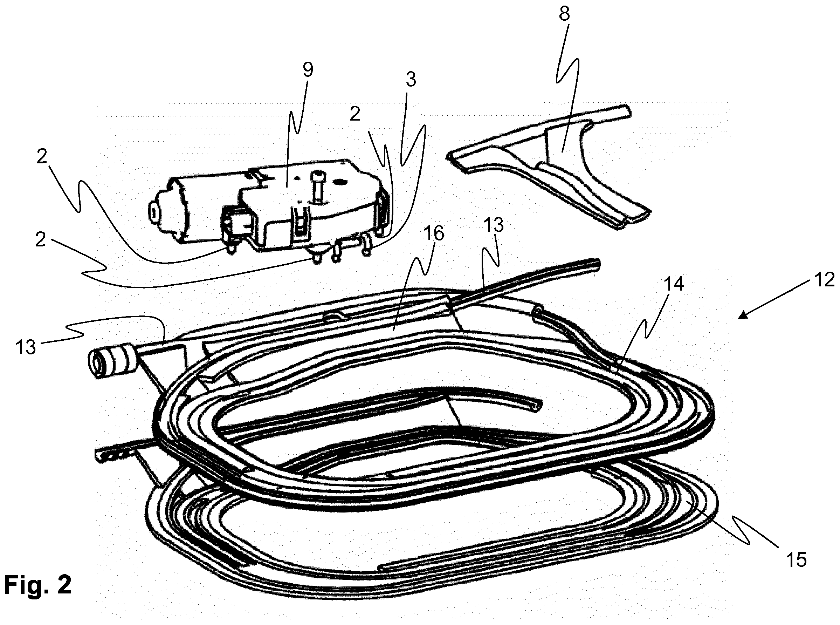

Um die Montage der Abtrennvorrichtung 1 in das Fahrzeug zu erleichtern und zugleich die beim Verschieben der Übertragungsmittel 10 (s. Fig. 3) in den Führungsrohren 11 entstehenden Überlängen aufzunehmen, ist weiterhin ein Kanalbauteil 12 vorgesehen, welches anhand der Fig. 2 näher beschrieben wird.

Das Kanalbauteil 12 weist zwei Führungskanäle 13 zur Aufnahme der temporären Überlängen der Übertragungsmittel 10 (s. Fig. 3) auf. Die Führungskanäle 13 sind dabei spiralförmig innerhalb des Kanalbauteils 12 angeordnet, so dass die Überlängen der Übertragungsmittel 10 platzsparend aufgenommen werden können und das Kanalbauteil 12 nur vergleichsweise geringe Abmessungen aufweist.

Vorliegend ist das Kanalbauteil 12 aus einer Oberschale 14 und einer Unterschale 15 zusammengesetzt, in welchen jeweils eine halbrunde, nutartige Vertiefung angeordnet ist. Nach dem Zusammensetzen der Oberschale 14 und der Unterschale 15 sind somit die Führungskanäle 13 zwischen den beiden Schalen angeordnet. Vorliegend ist eine weitere Schale 8 als Oberschale 14 vorgesehen, was die Montage erleichtern kann oder die Anbindung weiterer Komponenten der Abtrennvorrichtung 1 an das Kanalbauteil 12 ermöglicht.

Zudem weist das Kanalbauteil 12 eine Aufnahmevorrichtung 16 zur Aufnahme des Antriebs 9 auf. Die Aufnahmevorrichtung 16 ist vorliegend in Form einer Aufnahmeplatte einteilig mit der Oberschale 14 ausgebildet und weist Bestigungsbohrungen für die Befestigung des Antriebs 9 auf. Der Antrieb 9 kann somit in einfacher Weise mittels an ihm angeordneter Befestigungspins 2 in die Befestigungsbohrungen eingesetzt werden. Zusätzlich können Befestigungsclips 3 an dem Antrieb 9 angeordnet sein, welche an dem Kanalbauteil 12, insbesondere an einem der Führungskanäle 13, einclipsbar sind. Der Antrieb 9 kann somit zusammen mit dem Kanalbauteil 12 vormontiert werden und muss nicht mehr separat in dem Fahrzeug befestigt werden. Das Kanalbauteil 12 kann kostengünstig als Spritzgussteil hergestellt werden.

Um eine vormontierbare Baugruppe zu erhalten, die die Rolloanordnung und die Antriebsvorrichtung enthält und die eine komplette Vormontage der Abtrennvorrichtung 1 mit Ausnahme der Führungsschienen 7 enthält, sind weiterhin die Lagermittel der Wickelwelle 4 als Endstücke 17 für die Führungsschienen 7 ausgebildet.

Figur 3 zeigt ein solches Endstück 17 in einer perspektivischen Darstellung. Das Endstück 17 enthält eine Führungsnut 20, die direkt an die Führungsnut 20 der Führungsschienen 7 anschließbar ist, so dass die Rolloanordnung mit der Antriebsvorrichtung komplett vormontiert werden kann und die Wickelwelle 4 bzw. der Zugspriegel 6 nicht mehr in die Führungsschienen 7 eingeführt werden müssen. Um die spätere, lagerichtige Montage der Führungsschienen 7 zu ermöglichen, weist das Endstück 17 ein Führungselement 18 auf, das vorliegend in Form einer Schwalbenschwanzführung ausgeführt ist.

Wie der Figur 3 weiterhin entnehmbar, ist an dem Endstück 17 das Führungsrohr 11 für das Übertragungsmittel 10 einteilig angeformt. Das Übertragungsmittel 10 ist vorliegend lediglich schematisch angedeutet. Die Endstücke 17 mit den Führungsrohren 11 können somit ebenfalls kostengünstig als Spritzgussstücke hergestellt werden. Einstell- und Montagearbeiten zur Befestigung der Führungsrohre 11 können entfallen, was zur Vereinfachung der Montage weiter beiträgt. Zudem sind die Führungsrohre 11 bereits während der Vormontage der Abtrennvorrichtung 1 stabil und verliersicher befestigt, was das Handling der Abtrennvorrichtung 1 bei der Montage erleichtert.

Figur 4 zeigt eine perspektivische, abgebrochene Detaildarstellung einer Führungsschiene 7, welche vorliegend von der Rückseite her gezeigt ist, so dass die Führungsnut 20 verdeckt ist. Die Führungsschiene 7 weist ebenfalls ein vorliegend in Form einer Schwalbenschwanzführung ausgeführtes Führungselement 18' auf, so dass die Führungsschiene 7 automatisch lagerichtig in Bezug auf das Endstück sowie die Antriebsvorrichtung und die Rolloanordnung positioniert ist, wenn die beiden Führungselemente 18, 18' ineinander greifen.

Um die Herstellung der Führungsrohre 11 als Spritzgussstücke zu erleichtern, können diese ebenfalls mehrteilig, vorzugsweise zweiteilig aus zwei Halbschalen 21, 21', ausgebildet sein. Figur 5 zeigt ein solches zweiteiliges Führungsrohr in einer Schnittdarstellung. Die Verbindung der beiden Halbschalen 21,21' kann durch angeformte bzw. direkt angespritzte Clipverbindungen 22 erfolgen, so dass die Montage der Führungsrohre besonders einfach und ohne Werkzeug möglich ist.

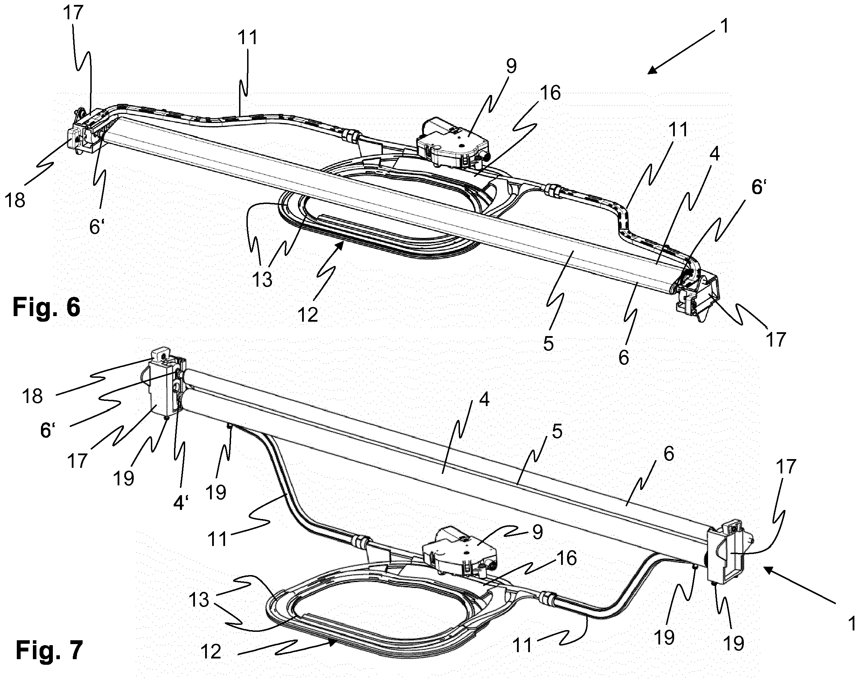

Der Aufbau und die Montage einer erfindungsgemäßen Abtrennvorrichtung 1, bei welcher die Antriebsvorrichtung und die Rolloanordnung eine vormontierbare Baugruppe bilden, wird im Folgenden anhand der Figuren 6 und 7 beschrieben. Figur 6 zeigt dabei die vormontierbare Baugruppe in einer Transportstellung, während Figur 7 die vormontierbare Baugruppe in Gebrauchsstellung zeigt.

Zur Vormontage der Baugruppe wird die Wickelwelle 4 zusammen mit dem Zugspriegel 6 in die Endstücke 17 eingesetzt. Um ein Herausrutschen der Wickelwelle 4 und des Zugspriegels 6 aus den Endstücken 17 zu verhindern, kann das Endstück 17 vorübergehend mit einem Deckel oder dgl. verschlossen werden. Je nach Ausführung der Abtrennvorrichtung 1 werden zudem die Übertragungsmittel 10 (Fig. 3), die bereits in die Führungsrohre 11 sowie in das Kanalbauteil 12 eingeführt sind, mit der Wickelwelle 4 und/oder dem Zugspriegel 6 verbunden. Ebenso wird der Antrieb 9 an die Aufnahmevorrichtung 16 auf dem Kanalbauteil 12 montiert und mit den Übertragungsmitteln verbunden. Da die einzelnen Komponenten der vormontierten Baugruppe nun bereits lagerichtig miteinander verbunden sind, kann der Antrieb 9, sofern erforderlich, bereits jetzt in Bezug auf die Übertragungsmittel 10 zentriert werden. Da die Abtrennvorrichtung 1 eine Vorrichtung zum Toleranzausgleich in Fahrzeugquerrichtung beinhaltet, dürfte eine solche Zentrierung im Regelfall jedoch nicht erforderlich sein. Die Vorrichtung zum Toleranzausgleich sieht beispielsweise vor, dass die seitlichen Enden 4' der Wickelwelle 4 sowie die Zugspriegelenden 6' des Zugspriegels 6 federnd und teleskopisch in der Wickelwelle 4 bzw. dem Zugspriegel 6 gelagert sind. In den Führungsrohren 11 kann ein Toleranzausgleich dadurch erzielt werden, dass diese mit einem gewissen Spiel in Fahrzeugquerrichtung mit dem Kanalbauteil 12 verbunden werden. Die Rolloanordnung ist nun komplett vormontiert, vorgespannt und mit dem Antrieb verbunden und daher bis auf die Führungsschienen 7 bereits funktionsfähig.

Aufgrund der drehbaren bzw. schwenkbaren Verbindung zwischen dem Kanalbauteil 12 und den Führungsrohren 11 ist es nun möglich, die Führungsrohre 11 zusammen mit den Endstücken 17 und der zwischen ihnen aufgenommenen Wickelwelle 4 und dem Zugspriegel 6 auf das Kanalbauteil 12 zu klappen, wie in Fig. 6 gezeigt. Die Baugruppe hat somit nur einen geringen Platzbedarf und kann problemlos transportiert, versandt und gelagert werden, wobei aufgrund der kompakten Abmessungen die einzelnen Komponenten der Baugruppe sich gegenseitig einen Schutz vor Beschädigungen bieten.

Zum Einbau in das Fahrzeug (Fig. 7) werden nun die Führungsrohre 11 mit den Endstücken 17, der Wickelwelle 4 und dem Zugspriegel 6 von dem Kanalbauteil 12 abgeklappt, so dass sie nun im Wesentlichen senkrecht zu dem Kanalbauteil stehen. Um die Baugruppe in dieser Einbauposition zu fixieren, kann in der schwenkbaren Verbindung zwischen dem Kanalbauteil 12 und den Führungsrohren 11 auch eine Rastvorrichtung (nicht gezeigt) vorgesehen sein.

Die Abtrennvorrichtung kann zur Montage von oben in das Fahrzeug eingehoben werden und wird dort bis zu ihrer endgültigen Montage mittels Positionierpins 19 im Fahrzeug vorpositioniert und fixiert. Vorliegend werden lediglich Positionierpins 19 benötigt, um die gesamte Baugruppe in entsprechende Befestigungspunkte des Fahrzeugs einzusetzen. Zur endgültigen Befestigung werden dann die beiden Endstücke 17 sowie das Kanalbauteil 12 mit jeweils zwei Schrauben im Fahrzeug befestigt, so dass insgesamt lediglich sechs Verschraubungen erforderlich sind. Innerhalb der vormontierten Baugruppe sind die einzelnen Komponenten hingegen dadurch verbunden, dass sie entweder zu einem Bauteil zusammengefasst sind, wie etwa die Führungsrohre 11 mit den Endstücken 17, oder bereits bei der Vormontage verbunden wurden.

Nachdem die vormontierte Baugruppe mittels der Positionierpins 19 im Fahrzeug positioniert und mittels der Schrauben befestigt ist, können die Führungsschienen 7 beidseits über die Führungselemente 18, 18', hier über die Schwalbenschwanzführung auf die Endstücke 17 geschoben werden. Die Führungsschienen 7 sind dadurch automatisch korrekt in Bezug auf die Rolloanordnung und die Antriebsvorrichtung positioniert und können dann in üblicher Weise an den Seitenverkleidungen und ggf. auch an den Endstücken 17 verschraubt werden.

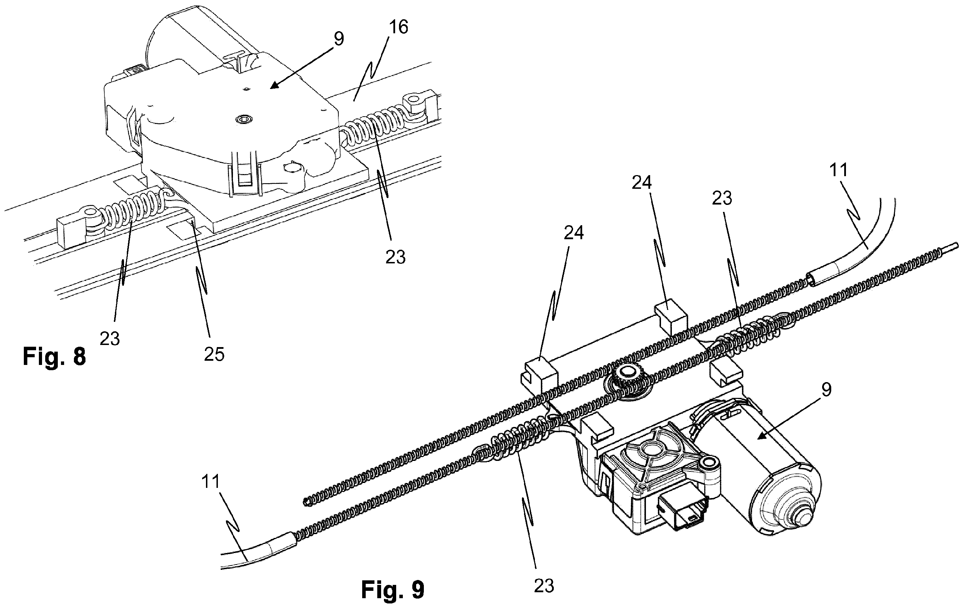

Die Figuren 8 und 9 zeigen schließlich noch eine Zentriervorrichtung für den Antrieb 9 in einer perspektivischen Ansicht, wobei die Zentriervorrichtung in Figur 8 in einer perspektivischen Draufsicht und in Figur 9 in einer perspektivischen Untersicht gezeigt ist. Um die Zentriervorrichtung zu bilden, ist der Antrieb 9 nicht starr an der Abtrennvorrichtung 1 befestigt, sondern ist verschieblich gegenüber der Abtrennvorrichtung 1, insbesondere gegenüber der vormontierbaren Baugruppe, an dieser befestigt.

Nach vorliegendem Beispiel ist der Antrieb 9 in Fahrzeugquerrichtung verschieblich an seiner Aufnahmevorrichtung 16 angeordnet. Der Antrieb 9 ist hierzu mit Führungsschuhen 24 (Fig. 9) versehen, mittels welcher er gleitend in einer entsprechenden Führung 25 der Aufnahmevorrichtung 16 gelagert ist. Vorliegend ist der Antrieb 9 in seiner Mittenlage gezeigt, aus welcher er nach beiden Seiten hin im Wesentlichen um den gleichen Weg verschiebbar ist. Im Übrigen steht der Antrieb 9 in üblicher Weise mit den beiden Übertragungsmitteln 10 in Eingriff, wie insbesondere der Fig. 9 entnehmbar. In dieser Mittenlage wird der Antrieb 9 durch zwei beidseits der Mittenlage angeordnete Federelemente 23 gehalten, die ihrerseits wiederum mit ihrem dem Antrieb 9 abgewandten Ende an der Aufnahmevorrichtung 19 fixiert sind. Wird die hier nicht dargestellte Rollobahn 5 nun mittels des Antriebs 9 ausgezogen oder aufgewickelt, so können zunächst die beiden Übertragungsmittel 10 gleichmäßig durch den Antrieb 9 beaufschlagt werden, so dass der Antrieb 9 durch die beiden Federelemente 23 in der Mittenlage gehalten bleibt.

Sobald jedoch eines der Übertragungsmittel 10 bzw. das von diesem angetriebene Zugspriegelende 6' seine Endlage erreicht, kann die Antriebsbewegung nur noch an das andere Übertragungsmittel 10 abgegeben werden. Da der Antrieb 9 jedoch mit beiden Übertragungsmitteln 10 in Eingriff steht, verschiebt sich nun der Antrieb 9 aus der Mittenlage, bis schließlich auch das zweite Übertragungsmittel 10 bzw. das von diesem angetriebene Zugspriegelende 6' seine Endlage erreicht. Es findet somit bei Erreichen der Endlage automatisch eine Zentrierung des Antriebs 9 in Bezug auf die Übertragungsmittel 10 statt. Fahrzeug- und Montagetoleranzen können somit selbsttätig während des Betriebs innerhalb der Abtrennvorrichtung 1 ausgeglichen werden.

Abweichend von der gezeigten Darstellung, bei welcher der Antrieb 9 linear verschieblich an der Aufnahmevorrichtung 19 gelagert ist, wäre es natürlich ebenso möglich, den Antrieb über seine Motorachse drehbar an der Aufnahmevorrichtung 19 zu lagern. Auch in diesem Fall kann der Antrieb 9 durch Federelemente 23 in seiner Mittenlage gehalten werden und sich bei Erreichen der Endlage eines der Übertragungselemente aus der Mittenlage in eine Richtung verdrehen.

Insgesamt kann bei der beschriebenen Abtrennvorrichtung 1 der Montageaufwand dadurch reduziert werden, dass sämtliche benötigten Funktionen durch speziell entwickelte Spritzgussteile in die vormontierte Baugruppe integriert werden können. Insbesondere können die Überlängen der Steigungskabel in dem Kanalbauteil 12 verortet werden, welches zugleich den Antrieb 9 aufnimmt. Das Kanalbauteil 12, welches die Überlängen der Steigungskabel aufnimmt, ermöglicht daher auch bei anderen mittels eines Antriebs und Übertragungsmitteln wie Steigungskabeln angetriebenen Vorrichtungen eines Kraftfahrzeugs eine vereinfachte Montage und einen sichereren Betrieb. In Frage kommen neben verschiedensten Rolloanordnungen beispielsweise auch Schiebedächer, Windschotts, Fensterscheiben, Verdeckelemente und sämtliche anderen Teile eines Kraftfahrzeugs, welche zwischen verschiedenenen Positionen hin- und her bewegt werden sollen. Dadurch, dass die Endstücke 17 einteilig mit den Führungsrohren 11 ausgebildet sind und mit dem Führungselement 18 eine definierte Schnittstelle zu den Führungsschienen 7 bereitstellen, wird der Montage- und Einstellaufwand weiter reduziert.

### Bezugszeichenliste

- 1: Abtrennvorrichtung
- 2: Befestigungspins
- 3: Befestigungsclips
- 4: Wickelwelle
- 4': seitliches Ende der Wickelwelle
- 5: Rollobahn
- 6: Zugspriegel
- 6': Zugspriegelende
- 7: Führungsschiene
- 7a: erster Führungsschienenabschnitt
- 7b: zweiter Führungsschienenabschnitt
- 8: weitere Schale
- 9: Antrieb
- 10: Übertragungsmittel
- 11: Führungsrohre
- 12: Kanalbauteil
- 13: Führungskanäle
- 14: Oberschale
- 15: Unterschale
- 16: Aufnahmevorrichtung
- 17: Endstücke
- 18,18': Führungselement
- 19: Positionierpins
- 20: Führungsnut
- 21,21': Halbschalen
- 22: Clipverbindung
- 23: Federelement
- 24: Führungsschuh
- 25: Führung

## Patentansprüche

1. Abtrennvorrichtung (1) zum Abtrennen eines Laderaums eines Kraftfahrzeugs mit wenigstens einer Rolloanordnung, welche eine Wickelwelle (4) mit zwei seitlichen Enden (4'), eine auf die Wickelwelle (4) aufwickelbare bzw. von dieser abwickelbare Rollobahn (5), ein Zugelement zum Aufwickeln bzw. Abwickeln der Rollobahn (5) sowie zwei Lagermittel, in welchen die Wickelwelle (4) mit ihren seitlichen Enden (4') drehbar gelagert ist, aufweist, mit einer Antriebsvorrichtung, welche wenigstens einen elektrischen Antrieb (9), zwei an ihrem einen Ende mit dem Antrieb (9) und an ihrem anderen Ende mit der Rolloanordnung, insbesondere mit dem Zugspriegel (6), verbundene Übertragungsmittel (10) zur Betätigung der Rollobahn (5), sowie zwei Führungsrohre (11), in welchen die Übertragungsmittel (10) verschieblich geführt sind, aufweist, sowie vorzugsweise mit wenigstens zwei einander gegenüberliegenden Führungsschienen (7), **dadurch gekennzeichnet, dass** die Antriebsvorrichtung und die Rolloanordnung mit der Wickelwelle (4), der Rollobahn (5), dem Zugelement und den Lagermitteln eine vormontierbare Baugruppe bilden, wobei die einzelnen Bauteile der Abtrennvorrichtung (1) lagerichtig zueinander vormontiert sind und wobei die Abtrennvorrichtung (1) wenigstens zwei Positionierhilfen zur Vorpositionierung der vormontierbaren Baugruppe in dem Kraftfahrzeug aufweist.

2. Abtrennvorrichtung (1) nach dem vorhergehenden Anspruch, **dadurch gekennzeichnet, dass** die Rolloanordnung kassettenlos ausgeführt ist.

3. Abtrennvorrichtung (1) nach einem der vorhergehenden Ansprüche, **dadurch gekennzeichnet, dass** die Lagermittel der Wickelwelle (4) lösbare Endstücke (17) für die Führungsschienen (7) bilden, wobei vorzugsweise die Endstücke (17) ein Führungselement (18), insbesondere eine Schwalbenschwanzführung, zur Positionierung und Befestigung der Führungsschienen (7) beinhalten.

4. Abtrennvorrichtung (1) nach einem der vorhergehenden Ansprüche, **dadurch gekennzeichnet, dass** Wickelwelle (4) und/oder der Zugspriegel (6) eine Vorrichtung zum Toleranzausgleich in Fahrzeugquerrichtung beinhalten.

5. Abtrennvorrichtung (1) nach einem der vorhergehenden Ansprüche, **dadurch gekennzeichnet, dass** jedes der beiden Führungsrohre (11) mit seinem einen Ende an einem der beiden Endstücke (17) befestigt ist und mit seinem anderen Ende an dem Kanalbauteil (12) befestigt ist, wobei vorzugsweise die Führungsrohre (11) schwenkbar an dem Kanalbauteil (12) befestigt sind und zwischen einer an das Kanalbauteil (12) angeklappten Transportposition und einer vom Kanalbauteil (12) abgeklappten Gebrauchsposition bewegbar sind und wobei vorzugsweise die Führungsrohre (11) zumindest in der Gebrauchsposition verrastbar sind.

6. Abtrennvorrichtung (1) nach einem der vorhergehenden Ansprüche, **dadurch gekennzeichnet, dass** die Führungsrohre (11) zweiteilig aus zwei Halbschalen (21, 21') ausgebildet sind, wobei vorzugsweise die Halbschalen (21, 21') durch Clipverbindungen miteinander verbunden sind.

7. Abtrennvorrichtung (1) nach einem der vorhergehenden Ansprüche, **dadurch gekennzeichnet, dass** jedes Endstück einteilig mit dem ihm zugeordneten Führungsrohr, insbesondere mit einer der Halbschalen (21, 21') des ihm zugeordneten Führungsrohres (11), ausgebildet ist.

8. Abtrennvorrichtung (1) nach einem der vorhergehenden Ansprüche, **dadurch gekennzeichnet, dass** die Positionierhilfenals Positionierpins (19) zur Vorpositionierung der vormontierbaren Baugruppe in dem Kraftfahrzeug ausgebildet sind.

9. Abtrennvorrichtung (1) nach einem der vorhergehenden Ansprüche, **dadurch gekennzeichnet, dass** die Wickelwelle (4) mit ihren seitlichen Enden (4') verschiebbar in den Führungsschienen (7) geführt ist, wobei die Wickelwelle (4) zwischen einer Arbeitsposition, in welcher die Rollobahn (5) mittels des Zugspriegels (6) ausziehbar ist, und einer Verstauposition und/oder einer weiteren Arbeitsposition hin- und her bewegbar ist.

10. Abtrennvorrichtung (1) nach einem der vorhergehenden Ansprüche, **dadurch gekennzeichnet, dass** die Abtrennvorrichtung (1) einen Zugspriegel (6) mit zwei Zugspriegelenden (6') zum Ausziehen und Aufwickeln der Rollobahn (5) aufweist, welcher verschiebbar in der Führungsschiene (7) geführt ist.

11. Abtrennvorrichtung (1) nach einem der vorhergehenden Ansprüche, **dadurch gekennzeichnet, dass** die vormontierbare Baugruppe eine Aufnahmevorrichtung (16) zur Aufnahme des elektrischen Antriebs (9) umfasst und dass der elektrische Antrieb (9) um eine Mittenlage beweglich, insbesondere verschiebbar oder drehbar, an der Aufnahmevorrichtung (16) befestigt ist.

12. Abtrennvorrichtung (1) nach dem vorhergehenden Anspruch, **dadurch gekennzeichnet, dass** der elektrische Antrieb (9) mittels wenigstens eines Federelements (23), vorzugsweise mittels zwei beidseits der Mittenlage angeordneter Federelemente (23), an der Aufnahmevorrichtung (16) befestigt ist.

13. Abtrennvorrichtung (1) nach einem der vorhergehenden Ansprüche, **dadurch gekennzeichnet, dass** die Abtrennvorrichtung (1) wenigstens zwei einander gegenüberliegende Führungsschienen (7) beinhaltet.

14. Abtrennvorrichtung (1) nach einem der vorhergehenden Ansprüche, **dadurch gekennzeichnet, dass** die Antriebsvorrichtung ein Kanalbauteil (12) mit zwei Führungskanälen (13) zur Aufnahme von temporären Überlängen der Übertragungsmittel (10) aufweist, wobei vorzugsweise das Kanalbauteil (12) einen mehrschaligen Aufbau mit wenigstens einer Oberschale (14) und wenigstens einer Unterschale (15) aufweist, wobei die Führungskanäle (13) zwischen den Schalen (14, 15) ausgebildet sind.

15. Abtrennvorrichtung (1) nach einem der beiden vorhergehenden Ansprüche, **dadurch gekennzeichnet, dass** das Kanalbauteil (12) eine vorzugsweise angeformte Aufnahmevorrichtung (16) zur Aufnahme des elektrischen Antriebs (9) aufweist.

## Claims

1. A separating device (1) for separating a storage space of a motor vehicle having at least one roller curtain arrangement comprising a winding shaft (4) having two lateral ends (4'), a roller curtain sheet (5) for winding up on the winding shaft (4) or unwinding off of the same, a tension element for winding up or unwinding off the roller curtain sheet (5), and two bearings in which the lateral ends (4') of the winding shaft (4) are rotatably supported, having a drive device comprising at least one electric drive (9), two transmission means (10) for actuating the roller curtain sheet (5) and connected at one end thereof to the drive (9) and at the other end thereof to the roller curtain arrangement, particularly to a tension bow (6), and comprising two guide tubes (11) in which the transmission means (10) are displaceably guided, and preferably having at least two guide rails (7) opposite each other, **characterized in that** the drive device and the roller curtain arrangement having the winding shaft (4), the roller curtain sheet (5), then tension element, and the bearings form a pre-assemblable assembly, wherein the individual components of the separating device (1) are preassembled to each other in the correct position, and wherein the separating device (1) comprises at least two positioning aids for pre-positioning the pre-assemblable assembly in the motor vehicle.

2. The separating device (1) according to the preceding claim, **characterized in that** the roller curtain arrangement is implemented without a cassette.

3. The separating device (1) according to any one of the preceding claims, **characterized in that** the bearings of the winding shaft (4) form releasable end pieces (17) for the guide rails (7), wherein the end pieces (17) preferably comprise a guide element (18), particularly a dovetail guide, for positioning and fastening the guide rails (7).

4. The separating device (1) according to any one of the preceding claims, **characterized in that** the winding shaft (4) and/or the tension bow (6) comprise a device for compensating for tolerance in the transverse vehicle direction.

5. The separating device (1) according to any one of the preceding claims, **characterized in that** one end of each of the two guide tubes (11) is attached to the one of the two end pieces (17) and the other end thereof is attached to the channel component (12), wherein the guide tubes (11) are preferably pivotably attached to the channel component (12) and can be displaced between a transport position folded onto the channel component (12) and a use position folded away from the channel component (12), and wherein the guide tubes (11) are preferably lockable at least in the use position.

6. The separating device (1) according to any one of the preceding claims, **characterized in that** the guide tubes (11) are implemented of two half shells (21, 21'), wherein the half shells (21, 21') are preferably connected to each other by clip connections.

7. The separating device (1) according to any one of the preceding claims, **characterized in that** each end piece is implemented integrally with the associated guide tube, particularly with one of the half shells (21, 21') of the associated guide tube (11).

8. The separating device (1) according to any one of the preceding claims, **characterized in that** the positioning aids are implemented as positioning pins (19) for prepositioning the pre-assemblable assembly in the motor vehicle.

9. The separating device (1) according to any one of the preceding claims, **characterized in that** the lateral ends (4') of the winding shaft (4) are displaceably guided in the guide rails (7), wherein the winding shaft (4) can be displaced back and forth between a working position, in which the roller curtain sheet (5) can be pulled out by means of the tension bow (6), and a storage position and/or further working position.

10. The separating device (1) according to any one of the preceding claims, **characterized in that** the separating device (1) comprises a tension bow (6) having two tension bow ends (6') for pulling out and winding up the roller curtain sheet (5) and being displaceably guided in the guide rail (7).

11. The separating device (1) according to any one of the preceding claims, **characterized in that** the pre-assemblable assembly comprises a receiving device (16) for receiving the electrical drive (9) and that the electrical drive (9) is displaceably attached to the receiving device (16), particularly laterally or rotationally displaceably about a midpoint.

12. The separating device (1) according to the preceding claim, **characterized in that** the electrical drive (9) is attached to the receiving device (16) by means of at least one spring element (23), preferably by means of two spring elements (23) disposed on both sides of the midpoint.

13. The separating device (1) according to any one of the preceding claims, **characterized in that** the separating device (1) comprises at least two guide rails (7) opposite each other.

14. The separating device (1) according to any one of the preceding claims, **characterized in that** the drive device comprises a channel component (12) having two guide channels (13) for receiving the temporary excess length of the transmission means (10), wherein the channel component (12) preferably comprises a multi-shell construction having at least one upper shell (14) and at least one lower shell (15), wherein the guide channels (13) are implemented between the shells (14, 15).

15. The separating device (1) according to any one of the two preceding claims, **characterized in that** the channel component (12) comprises a preferably molded-on receiving device (16) for receiving the electrical drive (9).

## Revendications

1. Dispositif de séparation (1) pour séparer un espace de chargement d'un véhicule à moteur avec au moins un arrangement de store, lequel comporte un arbre d'enroulement (4) avec deux extrémités latérales (4'), une bande de store (5) enroulable sur l'arbre d'enroulement (4) et déroulable de ce dernier, un élément de traction pour enrouler ou dérouler la bande de store (5) ainsi que deux moyens de paliers, dans lesquels l'arbre d'enroulement (4) est monté par ses extrémités latérales (4') de manière rotative, avec un dispositif d'entraînement, lequel comporte au moins un entraînement électrique (9), deux moyens de transmission (10) reliés en l'une de leurs extrémités avec l'entraînement (9) et en l'autre de leurs extrémités avec l'arrangement de store, en particulier avec l'arceau de traction (6), pour l'actionnement de la bande de store (5), ainsi que deux tubes de guidage (11), dans lesquels les moyens de transmission (10) sont guidés de manière translatable, ainsi qu'avec, de préférence, au moins deux rails de guidage (7) disposés l'un en face de l'autre, **caractérisé en ce que** le dispositif d'entraînement et l'arrangement de store forment avec l'arbre d'enroulement (4), la bande de store (5), l'élément de traction et les moyens de paliers un sous-groupe prémontable, sachant que les composants individuels du dispositif de séparation (1) sont prémontés dans la position correcte les uns par rapport aux autres et sachant que le dispositif de séparation (1) présente au moins deux aides au positionnement pour le pré-positionnement du sous-groupe prémontable dans le véhicule à moteur.

2. Dispositif de séparation (1) selon la revendication précédente, **caractérisé en ce que** l'arrangement de store est réalisé sans cassette.

3. Dispositif de séparation (1) selon l'une quelconque des revendications précédentes, **caractérisé en ce que** les moyens de paliers de l'arbre d'enroulement (4) forment des embouts détachables (17) pour les rails de guidage (7), sachant que les embouts (17) contiennent de préférence un élément de guidage (18), en particulier une glissière en queue d'aronde, pour le positionnement et la fixation des rails de guidage (7).

4. Dispositif de séparation (1) selon l'une quelconque des revendications précédentes, **caractérisé en ce que** l'arbre d'enroulement (4) et/ou l'arceau de traction (6) contiennent un dispositif pour la compensation de tolérances dans le sens transversal à celui du véhicule.

5. Dispositif de séparation (1) selon l'une quelconque des revendications précédentes, **caractérisé en ce que** chacun des deux tubes de guidage (11) est fixé en l'une de ses extrémités sur l'un des deux embouts (17) et en l'autre de ses extrémités sur l'élément de canal (12), sachant que les tubes de guidage (11) sont de préférence fixés sur l'élément de canal (12) de manière pivotante et sont mobiles entre une position de transport repliée à l'élément de canal (12) et une position d'utilisation déployée de l'élément de canal (12), et sachant que les tubes de guidage (11) peuvent de préférence s'encliqueter au moins dans la position d'utilisation.

6. Dispositif de séparation (1) selon l'une quelconque des revendications précédentes, **caractérisé en ce que** les tubes de guidage (11) se présentent sous une forme à deux pièces en deux demi-coquilles (21, 21'), sachant que les demi-coquilles (21, 21') sont de préférence reliées l'une à l'autre par des assemblages clipsés.

7. Dispositif de séparation (1) selon l'une quelconque des revendications précédentes, **caractérisé en ce que** chaque embout se présente sous une forme en une pièce avec le tube de guidage qui lui est attribué, en particulier avec l'une des demi-coquilles (21, 21') du tube de guidage (11) qui lui est attribué.

8. Dispositif de séparation (1) selon l'une quelconque des revendications précédentes, **caractérisé en ce que** les aides au positionnement se présentent sous la forme de broches de positionnement (19) pour le pré-positionnement du sous-groupe prémontable dans le véhicule à moteur.

9. Dispositif de séparation (1) selon l'une quelconque des revendications précédentes, **caractérisé en ce que** l'arbre d'enroulement (4) est guidé de manière translatable, par ses extrémités latérales (4'), dans les rails de guidage (7), sachant que l'arbre d'enroulement (4) est déplaçable en va-et-vient entre une position de travail, dans laquelle la bande de store (5) est déployable à l'aide de l'arceau de traction (6), et une position de rangement et/ou une position de travail supplémentaire.

10. Dispositif de séparation (1) selon l'une quelconque des revendications précédentes, **caractérisé en ce que** le dispositif de séparation (1) comporte un arceau de traction (6) avec deux extrémités d'arceau de traction (6') pour déployer et enrouler la bande de store (5), lequel est guidé de manière translatable dans le rail de guidage (7).

11. Dispositif de séparation (1) selon l'une quelconque des revendications précédentes, **caractérisé en ce que** le sous-groupe prémontable comporte un dispositif d'accueil (16) pour accueillir l'entraînement électrique (9) et **en ce que** l'entraînement électrique (9) est fixé sur le dispositif d'accueil (16) de manière mobile autour d'une position centrale, en particulier translatable ou rotatif.

12. Dispositif de séparation (1) selon la revendication précédente, **caractérisé en ce que** l'entraînement électrique (9) est fixé sur le dispositif d'accueil (16) au moyen au moins d'un élément de ressort (23), de préférence au moyen de deux éléments de ressorts (23) disposés sur les deux côtés de la position centrale.

13. Dispositif de séparation (1) selon l'une quelconque des revendications précédentes, **caractérisé en ce que** le dispositif de séparation (1) comprend au moins deux rails de guidage (7) disposés l'un en face de l'autre.

14. Dispositif de séparation (1) selon l'une quelconque des revendications précédentes, **caractérisé en ce que** le dispositif d'entraînement présente un élément de canal (12) avec deux canaux de guidage (13) pour accueillir des surlongueurs temporaires des moyens de transmission (10), sachant que, de préférence, l'élément de canal (12) présente une structure multiparois avec au moins une paroi supérieure (14) et au moins une paroi inférieure (15), sachant que les canaux de guidage (13) sont formés entre les parois (14, 15).

15. Dispositif de séparation (1) selon l'une quelconque des deux revendications précédentes, **caractérisé en ce que** l'élément de canal (12) présente un dispositif d'accueil (16) de préférence surmoulé pour accueillir l'entraînement électrique (9).
